# EUROPÄISCHE PATENTSCHRIFT

(11) **EP 0 474 623 B1**
(45) Veröffentlichungstag und Bekanntmachung des Hinweises auf die Patenterteilung: **13.04.1994**
(21) Anmeldenummer: 91890188.5
(22) Anmeldetag: 26.08.1991
(51) Int. Cl.: F01L 3/20, F02B 33/04, F02B 33/30, F02M 35/10, F02M 69/04, F02D 9/16, F02M 69/10

(54) **Fremdgezündete Zweitakt-Hubkolbenbrennkraftmaschine mit Kurbelgehäusespülung**
Externally ignited two stroke internal combustion engine with crankcase scavening
Moteur à combustion interne à allumage commandé avec balayage du carter de vilebrequin

(30) Priorität: 07.09.1990 AT 1828/90
(43) Veröffentlichungstag der Anmeldung: 11.03.1992
(73) Patentinhaber: Laimböck, Franz, Dipl.Ing.Dr., A-8051 Graz-Thal (AT)
(72) Erfinder: Laimböck, Franz, Dipl.Ing.Dr., A-8051 Graz-Thal (AT)
(74) Vertreter: Hübscher, Heiner, Dipl.-Ing.

(56) Entgegenhaltungen:
- EP-A- 0 182 473
- EP-A- 0 302 045
- DE-A- 3 603 418
- DE-C- 3 733 441
- FR-A- 2 596 456
- US-A- 4 474 145
- US-A- 4 825 821

## Beschreibung

Die Erfindung bezieht sich auf eine fremdgezündete Zweitakt-Hubkolbenbrennkraftmaschine mit Kurbelgehäusespülung, einer Kraftstoff-Einspritzdüse und mit einem im Lufteinlaß vor einwärts öffnenden Schließzungen vorgesehenen, willkürlich betätigbaren Drosselorgan (siehe US-A-4708100).

Bei bekannten Zweitakt-Brennkraftmaschinen dieser Art ist zwischen dem Drosselorgan und den sich auf Grund der Druckdifferenz zwischen dem Lufteinlaß und dem Kurbelgehäuse öffnenden bzw. schließenden Schließzungen sowie der Kraftstoff-Einspritzdüse ein verhältnismäßig großer Abstand bzw. Totraum vorhanden. Außerdem sind die Lichtweiten des Einlasses vor und hinter dem Drosselorgan nicht wesentlich verschieden. Dadurch ergibt sich im Teillastbereich zufolge verringerter Strömungsgeschwindigkeit der Frischluft im Bereich der Kraftstoff-Einspritzdüse eine verschlechterte Gemischbildung mit vergleichsweise großen Tropfen bei der Einspritzung. Eine ungünstige Gemischbildung bringt selbstverständlich auch verschlechterte Abgaswerte mit sich.

Handelt es sich um eine elektronische Einspritzsteuerung mit Hilfe eines Sensors für die jeweilige Stellung des Drosselorgans, so wird bei dessen schnellem Öffnen die ausgespritzte Kraftstoffmenge mit dem nächsten Rechenvorgang zwar bereits erhöht, die in der ganzen Ansaugleitung vorhandene bisher verhältnismäßig große Luftmenge muß dann aber erst beschleunigt werden, was zu einem Verzug im Ansprechverhalten der Brennkraftmaschine und ebenfalls zu schlechten Abgaswerten wegen ungünstiger Zusammensetzung des Kraftstoffluftgemisches führt.

Es ist bereits bekannt (AT-PS 391 351), die Kraftstoff-Einspritzdüse in der Zylinderwandung schräg anzuordnen und durch wenigstens ein Fenster in der Kolbenwand im wesentlichen gegen den Kolbenboden zu richten, wobei der hohle Kolben gegen das Kurbelgehäuse weitgehend abgeschlossen ist. Der Überströmkanal bzw. die Kraftstoff-Einspritzdüse ist an der dem Auslaß gegenüberliegenden Seite vorgesehen. Dadurch wird eine bessere Gemischaufbereitung erzielt, weil wenigstens ein Teil des Kraftstoffstrahles auf den im Betrieb heißesten Teil, nämlich den Kolbenboden auftrifft. Außerdem wird dem Kolbenboden die Energie der Verdunstungswärme entzogen, der Kolbenboden also gekühlt. Schließlich wird im Brennraum eine Ladungsschichtung erzielt, da das fette Gemisch an der dem Auslaß gegenüberliegenden Seite eintritt, wogegen über die dem Auslaß nähergelegenen Überströmkanäle nur ein sehr mageres Gemisch aus dem Kurbelgehäuse in den Zylinderraum gelangt und sich somit ein Spülungskurzschluß schlimmstenfalls aus magerem Gemisch ergeben kann, so daß die Verbrauchs- und Abgaswerte verbessert werden. Dabei ist aber auf den Teillastbereich bzw. das Ansprechverhalten und auf die Verhältnisse bei raschem Öffnen des Drosselorgans nicht Rücksicht genommen.

Der Erfindung liegt die Aufgabe zugrunde, eine Zweitakt-Hubkolbenbrennkraftmaschine zu schaffen, die bei gutem Ansprechverhalten günstige Werte im Teillastbereich liefert und zu keinen unerwünschten Kraftstoff-Luftgemischen bei raschem Öffnen des Drosselorgans führt.

Die Erfindung löst die gestellte Aufgabe im wesentlichen dadurch, daß die Schließzungen dem vorzugsweise von einem Drehschieber gebildeten Drosselorgan unmittelbar nachgeordnet sind und dieses von der Leerlauf- bis zu einer vorbestimmten Teillaststellung zur Freigabe lediglich einer strömungsgünstig zum Bereich der Mündung der Kraftstoff-Einspritzdüse führenden Zweigleitung ausgebildet ist, die wenigstens eine eigene Schließzunge aufweist und deren Lichtweite nur einen Bruchteil der Lichtweite des Gesamteinlasses beträgt.

Da vom Leerlauf bis zur vorbestimmten Teillast die Frischluft nur mehr über die Zweigleitung der Kraftstoff-Einspritzdüse zugeführt wird und die Schließzunge der Zweigleitung mit anderer Steifigkeit als die übrigen ausgebildet werden kann, ergibt sich in dieser Zweigleitung eine hohe Strömungsgeschwindigkeit mit starken Turbulenzen und Querströmungen im Bereich der Düsenmündung, so daß der Kraftstoffstrahl in feinste Tröpfchen unterteilt, also besonders gut zerstäubt und dadurch die Gemischbildung wesentlich verbessert wird. Da die Schließzungen dem Drosselorgan unmittelbar nachgeordnet sind, wird der Totraum auf ein Minimum herabgesetzt, was das Ansprechverhalten günstig beeinflußt, da wesentlich geringere Luftvolumina beschleunigt werden müssen.

Die Zerstäubung des Kraftstoffes und damit die Gemischbildung im Teillastbereich wird noch weiter verbessert, wenn die Zweigleitung im Bereich der Mündung der Kraftstoff-Einspritzdüse ein diese umschließendes drallerzeugendes Gehäuse bildet.

In weiterer Ausführung der Erfindung ist der Austritt der Zweigleitung aus dem drallerzeugenden Gehäuse wie die in an sich bekannter Weise in der Zylinderwand od. dgl. schräg angeordnete und durch wenigstens ein Fenster in der Wand des hohlen Kolbens vorzugsweise gegen den Kolbenboden gerichtete Kraftstoff-Einspritzdüse orientiert, wobei die Kraftstoff-Einspritzdüse und der oder die vom kurbelseitig weitgehend abgeschlossenen Kolbenraum in den Zylinderraum führende(n) Überströmkanal bzw. -kanäle an der dem Auslaß gegenüberliegenden Seite angeordnet sind. Dadurch wird die gewünschte Ladungsschichtung im Zylinderraum sowohl im Teillast- als auch im Vollastbetrieb erreicht und ein sogenannter Spülungskurzschluß, bei dem fettes Gemisch in den Auslaß gelangt, vermieden.

Um ein besseres Abgasverhalten bei Kaltstart zu erreichen, sind im Bereich des drallerzeugenden Gehäuses beheizbare Flächen vorgesehen, wobei diese Flächen auch von Leitwänden zur Drallerzeugung gebildet werden können.

Eine besonders zweckmäßige Konstruktion ergibt sich dadurch, daß das Drosselorgan bzw. der Drehschieber, die Schließzungen und gegebenenfalls die Kraftstoff-Einspritzdüse zu einer am Zylinder anflanschbaren Baueinheit zusammen gefaßt sind.

Dabei ist es vorteilhaft, wenn zwischen dem Drosselorgan bzw. dem Drehschieber und der Kraftstoff-Einspritzdüse ein Strömungskörper angeordnet ist, an dem die Schließzungen befestigt sind, der zugleich als Anschlag für die maximale Öffnung der Schließzungen dient und die Innenwand der Zweigleitung sowie der in das Kurbelgehäuse führenden Frischluftkanäle zur strömungsgünstigen Umgehung der Kraftstoff-Einspritzpumpe bildet. Durch diesen Strömungskörper wird der Totraum in wünschenswerter Weise auf ein Minimum herabgesetzt und eine günstige Form der Frischluftkanäle bzw. Zweigleitung erzielt, obwohl die in der Regel schwer unterzubringende Kraftstoff-Einspritzdüse im Wege liegt, die nun mit Hilfe des Strömungskörpers mit wenig Aufwand umgangen wird.

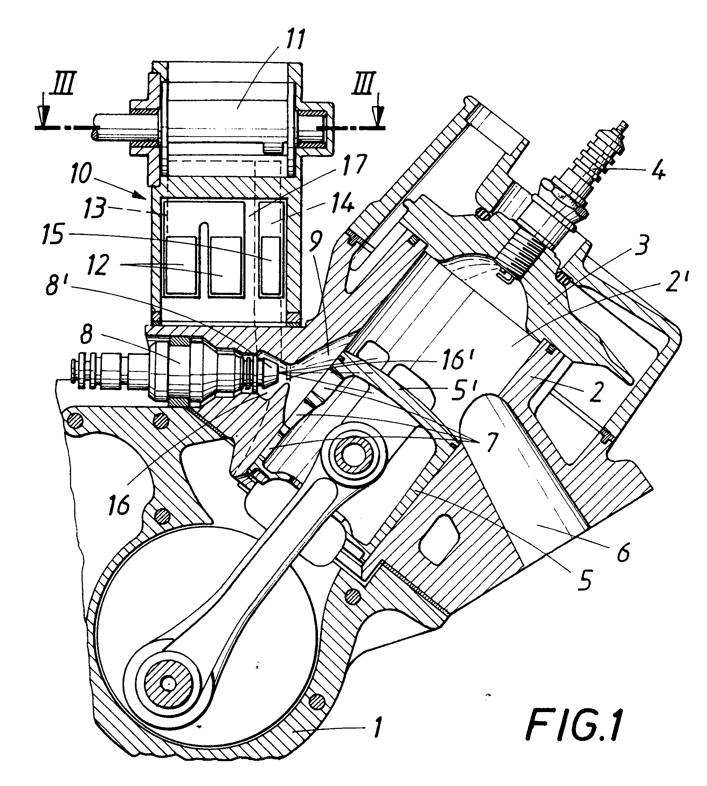

In der Zeichnung ist der Erfindungsgegenstand beispielsweise dargestellt, und zwar zeigen
- Fig. 1: eine fremdgezündete Zweitakt-Hubkolbenbrennkraftmaschine im quer zur Kurbelwelle durch die Zylinderachse gelegten Schnitt,

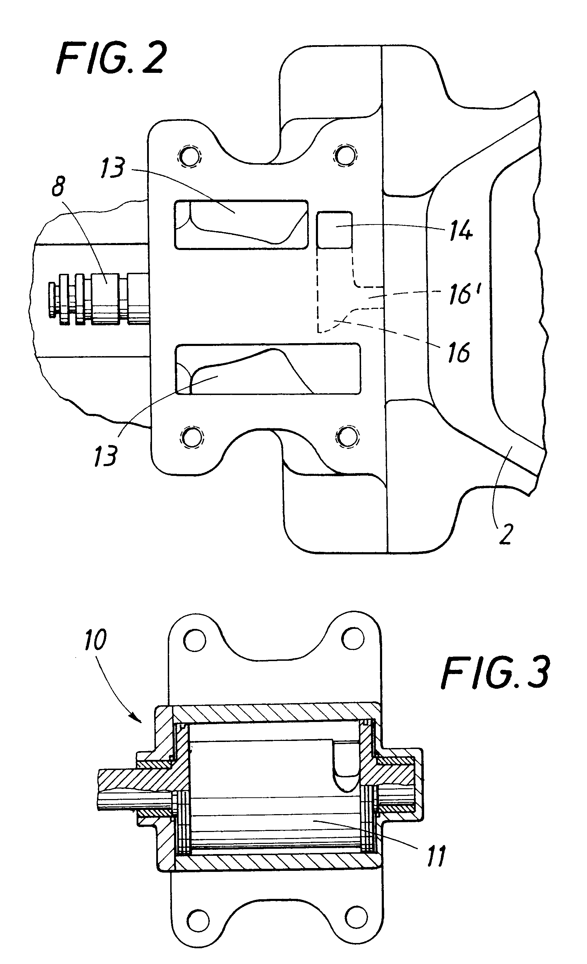

- Fig. 2: eine Draufsicht auf die Dichtfläche für den Anbau der das Drosselorgan und die Schließzungen umfassenden Baueinheit,
- Fig. 3: einen Schnitt durch diese Baueinheit nach der Linie III-III der Fig. 1 und die
- Fig. 4 - 6: die Baueinheit im quer zum Drehschieber geführten Schnitt in Leerlauf-, Teillast- und Vollaststellung

Am Kurbelgehäuse 1 ist der Zylinder 2 befestigt, in dessen Zylinderkopf 3 eine Zündkerze 4 eingesetzt ist. Der hohle und gegen das Kurbelgehäuse 1 weitgehend abgeschlossene Kolben 5 weist in seiner Kolbenwand an der dem Auslaß 6 gegenüberliegenden Seite mehrere Fenster 7 auf, durch die eine in der Zylinderwand schräg angeordnete Kraftstoff-Einspritzdüse 8 mit ihrem Strahl im wesentlichen gegen den Kolbenboden 5' gerichtet ist, wobei ein Überströmkanal 9 von dieser Kolbenseite bzw. von den Fenstern 7 in den Zylinderraum 2' führt. Das Kurbelgehäuse 1 ist über weitere Überströmkanäle, die näher zum Auslaß 6 angeordnet sind, mit dem Zylinderraum 2' verbunden, um eine gute Kurbelgehäusespülung zu erreichen.

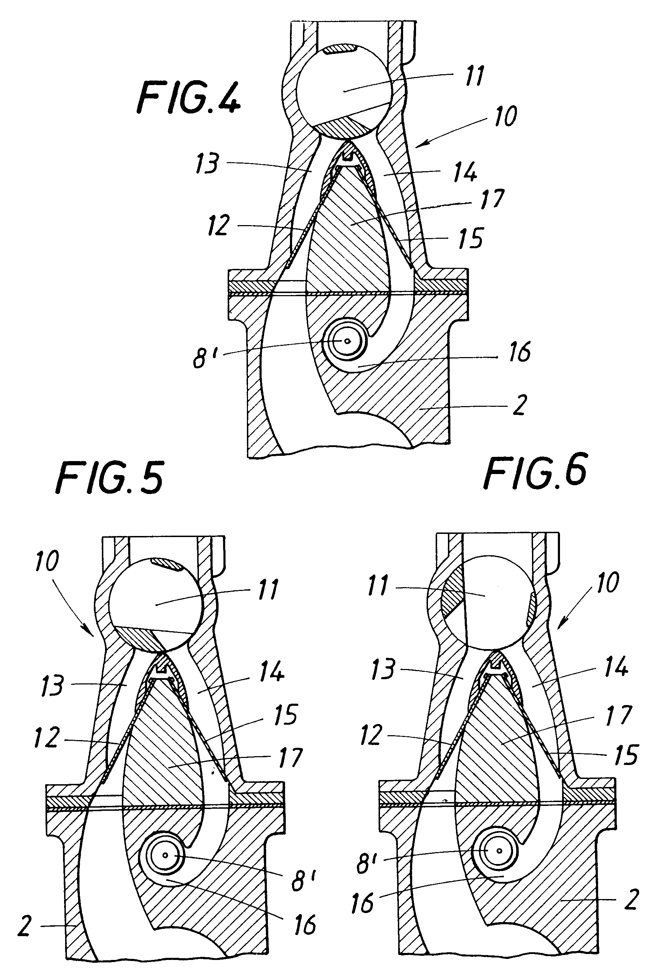

Am Zylinder bzw. Zylinderblock 2 ist eine insgesamt mit 10 bezeichnete Baueinheit angeflanscht, die ein als Drehschieber 11 ausgebildetes Drosselorgan für den Lufteinlaß und Schließzungen 12 für in das Kurbelgehäuse 1 führende Frischluftkanäle 13 umfaßt, wobei, wie ersichtlich, die Schließzungen 12 dem Drehschieber 11 unmittelbar nachgeordnet sind. Der Drehschieber 11 ist als Drosselorgan so ausgebildet, daß er von der Leerlaufstellung (Fig. 4) bis zu einer vorbestimmten Teillaststellung (Fig. 5) ausschließlich eine strömungsgünstig zum Bereich der Mündung 8' der Kraftstoff-Einspritzdüse 8 führende Zweigleitung 14 freigibt, die mit einer eigenen Schließzunge 15 versehen ist und deren Lichtweite nur einen Bruchteil der Lichtweite des Gesamteinlasses beträgt. Erst in der Vollaststellung nach Fig. 6 sind auch die Frischluftkanäle 13 je nach Stellung der Schließzungen 12 voll geöffnet.

Die Zweigleitung 14 bildet im Bereich der Mündung 8' der Kraftstoff-Einspritzdüse 8 ein diese umschließendes drallerzeugendes Gehäuse 16, so daß in der ersten Teillaststellung des Drehschiebers 11 in der Zweigleitung 14, die auch aus zwei Kanälen bestehen kann, eine hohe Strömungsgeschwindigkeit und um die Mündung 8' der Kraftstoff-Einspritzdüse 8 starke Turbulenzen und Querströmungen zur feinen Kraftstoffzerstäubung und guten LuftKraftstoffmischung auftreten. Der Austritt 16' der Zweigleitung 14 aus dem drallerzeugenden Gehäuse 16 ist wie die Einspritzdüse 8 bzw. deren Kraftstoffstrahl orientiert. Da für das Eintreten des fetten Gemisches in den Zylinderraum 2' nur der Überströmkanal 9 an der dem Auslaß 6 gegenüberliegenden Seite zur Verfügung steht, wird eine gewünschte Ladungsschichtung erreicht und ein Spülungskurzschluß im wesentlichen verhindert.

Zwischen dem als Drosselorgan dienenden Drehschieber 11 und der Kraftstoff-Einspritzdüse 8 ist ein Strömungskörper 17 angeordnet, an dem die Schließzungen 12, 15 befestigt sind und der zugleich als Anschlag für die maximale Öffnung dieser Schließzungen 12, 15 dient. Durch diesen Strömungskörper 17 wird die Innenwand der Zweigleitung 14 und der Frischluftkanäle 13 zur strömungsgünstigen Umgehung der Kraftstoff-Einspritzpumpe 8 gebildet, wie sich dies aus den Fig. 4 - 6 ergibt.

## Patentansprüche

1. Fremdgezündete Zweitakt-Hubkolbenbrennkraftmaschine mit Kurbelgehäusespülung, einer Kraftstoff-Einspritzdüse (8) und mit einem im Lufteinlaß vor einwärts öffnenden Schließzungen (12, 15) vorgesehenen, willkürlich betätigbaren Drosselorgan, dadurch gekennzeichnet, daß die Schließzungen (12, 15) dem vorzugsweise von einem Drehschieber (11) gebildeten Drosselorgan unmittelbar nachgeordnet sind und dieses von der Leerlauf- bis zu einer vorbestimmten Teillaststellung zur Freigabe lediglich einer strömungsgünstig zum Bereich der Mündung (8') der Kraftstoff-Einspritzdüse (8) führenden Zweigleitung (14) ausgebildet ist, die wenigstens eine eigene Schließzunge (15) aufweist und deren Lichtweite nur einen Bruchteil der Lichtweite des Gesamteinlasses beträgt.

2. Brennkraftmaschine nach Anspruch 1, dadurch gekennzeichnet, daß die Zweigleitung (14) im Bereich der Mündung (8') der Kraftstoff-Einspritzdüse (8) ein diese umschließendes drallerzeugendes Gehäuse (16) bildet.

3. Brennkraftmaschine nach den Ansprüchen 1 und 2, dadurch gekennzeichnet, daß der Austritt (16') der Zweigleitung (14) aus dem drallerzeugenden Gehäuse (16) wie die in an sich bekannter Weise in der Zylinderwand od. dgl. schräg angeordnete und durch wenigstens ein Fenster (7) in der Wand des hohlen Kolbens (5) vorzugsweise gegen den Kolbenboden (5') gerichtete Kraftstoff-Einspritzdüse (8) orientiert ist, wobei die Kraftstoff-Einspritzdüse (8) und der oder die vom kurbelseitig weitgehend abgeschlossenen Kolbenraum in den Zylinderraum (2') führende(n) Überströmkanal (9) bzw. -kanäle an der dem Auslaß (6) gegenüberliegenden Seite angeordnet sind.

4. Brennkraftmaschine nach einem der Ansprüche 1 - 3, dadurch gekennzeichnet, daß im Bereich des drallerzeugenden Gehäuses (16) beheizbare Flächen vorgesehen sind.

5. Brennkraftmaschine nach einem der Ansprüche 1 - 4, dadurch gekennzeichnet, daß das Drosselorgan bzw. der Drehschieber (11), die Schließzungen (12, 15) und gegebenenfalls die Kraftstoff-Einspritzdüse (8) zu einer am Zylinder (2) anflanschbaren Baueinheit (10) zusammengefaßt sind.

6. Brennkraftmaschine nach Anspruch 5, dadurch gekennzeichnet, daß zwischen dem Drosselorgan bzw. dem Drehschieber (11) und der Kraftstoff-Einspritzdüse (8) ein Strömungskörper (17) angeordnet ist, an dem die Schließzungen (12, 15) befestigt sind, der zugleich als Anschlag für die maximale Öffnung der Schließzungen (12, 15) dient und die Innenwand der Zweigleitung (14) sowie der in das Kurbelgehäuse (1) führenden Frischluftkanäle (13) zur strömungsgünstigen Umgehung der Kraftstoff-Einspritzpumpe (8) bildet.

## Claims

1. Spark-ignition two-stroke reciprocating internal combustion engine, with crankcase scavenging, a fuel injection nozzle (8), and an arbitrarily actuated throttle means provided in the air intake upstream of inwardly opening closure tongues (12, 15), characterised in that the closure tongues (12, 15) immediately follow the throttle means, which is preferably in the form of a rotary valve (11), and said throttle means is so constructed that from the idling position up to a predetermined part-load position it frees only a branch conduit (14) leading to the area of the orifice (8') of the fuel injection nozzle (8) in optimum flow conditions, said branch conduit having at least one own closure tongue (15) and its inside diameter being only a fraction of the inside diameter of the total inlet.

2. An internal combustion engine according to claim 1, characterised in that in the area of the orifice (8') of the fuel injection nozzle (8) the branch conduit (14) forms a twist-producing housing (16) enclosing said nozzle.

3. An internal combustion engine according to claims 1 and 2, characterised in that the exit (16') of the branch conduit (14) from the twist-producing housing (16) is oriented like the fuel injection nozzle (8), which in manner known per se is disposed at an angle in the cylinder wall or the like and which is directed, through at least one window (7) in the wall of the hollow piston (5), preferably against the piston head (5'), the fuel injection nozzle (8) and the transfer duct or ducts (9) which lead into the cylinder chamber (2') from the piston chamber, which is substantially shut off on the crank side, being disposed on the side remote from the exhaust (6).

4. An internal combustion engine according to any one of claims 1 to 3, characterised in that heatable surfaces are provided in the area of the twist-producing housing (16).

5. An internal combustion engine according to any one of claims 1 to 4, characterised in that the throttle means or rotary valve (11), the closure tongues (12, 15) and, if required, the fuel injection nozzle (8) are combined to form a unit (10) which can be flanged on the cylinder (2).

6. An internal combustion engine according to claim 5, characterised in that a flow member (17) on which the closure tongues (12, 15) are fixed is disposed between the throttle means or rotary valve (11) and the fuel injection nozzle (8) and also serves as a stop for the maximum opening of the closure tongues (12, 15) and forms the inner wall of the branch conduit (14) and of the fresh-air ducts (13) leading into the crankcase (1) in order to provide optimum flow conditions for bypassing the fuel injection pump (8).

## Revendications

1. Moteur à combustion interne à piston et à deux temps, à allumage commandé, avec une buse d'injection de carburant (8) et avec un organe d'étranglement, actionnable à volonté, prévu dans l'admission d'air, devant des languettes de fermeture (12, 15) à ouverture vers l'intérieur, caractérisé en ce que les languettes de fermeture (12, 15) sont disposées directement en aval de l'organe d'étranglement, formé de préférence par un boisseau rotatif (11), et cet organe d'étranglement étant réalisé pour aller de la position de ralenti à une position de charge partielle prédéterminée, pour libérer seulement une conduite de dérivation (14), menant, dans des conditions d'écoulement avantageuses, jusqu'à la zone de l'embouchure (8') de la buse d'injection de carburant (8), conduite de dérivation (14) présentant au moins une languette de fermeture (15) et dont l'ouverture libre ne contribue que pour une fraction à l'ouverture libre de la totalité de l'admission.

2. Moteur à combustion interne selon la revendication 1,
caractérisé en ce que la conduite de dérivation (14) forme dans la zone de l'embouchure (8') de la buse d'injection de carburant (8) un carter (16) à fonction de confinement et de production d'une rotation.

3. Moteur à combustion interne selon les revendications 1 et 2,
caractérisé en ce que la sortie (16') de la conduite de dérivation (14), hors du carter (16) à fonction de production de rotation, est orientée, comme la buse d'injection de carburant (8) disposée obliquement, de manière connue en soi, dans la paroi du cylindre ou analogue, en passant à travers au moins une fenêtre (7) ménagée dans la paroi du piston creux (5), de préférence en direction du fond de piston (5'), la buse d'injection de carburant (8) et le ou les canaux de pontage (9) menant de l'enceinte de piston, delimitée largement côté vilebrequin, à l'enceinte de cylindre (2'), étant disposés du côté opposé à l'échappement (6).

4. Moteur à combustion interne selon l'une des revendications 1 à 3,
caractérisé en ce que des surfaces pouvant être chauffées sont prévues dans la zone du carter (16) à fonction de production de rotation.

5. Moteur à combustion interne selon l'une des revendications 1 à 4,
caractérisé en ce que l'organe d'étranglement, respectivement le boisseau rotatif (11), les languettes de fermeture (12, 15) et, le cas échéant, la buse d'injection de carburant (8), sont groupés en un ensemble de construction (10) pouvant être monté par bride sur le cylindre (2).

6. Moteur à combustion interne selon la revendication 5,
caractérisé en ce qu'entre l'organe d'étranglement, respectivement le boisseau rotatif (11) et la buse d'injection de carburant (8) est disposé un corps favorisant l'écoulement (17), auquel sont fixées les languettes de fermeture (12, 14) et qui sert en même temps de butée pour l'ouverture maximale des languettes de fermeture (12, 15) et qui constitue la paroi intérieure de la conduite de dérivation (14), ainsi que les canaux d'air neuf (13) menant dans le carter de vilebrequin (1), en vue de contourner la pompe d'injection de carburant (8), de façon avantageuse pour l'écoulement.
